# EUROPÄISCHE PATENTSCHRIFT

(11) **EP 2 232 976 B1**
(45) Veröffentlichungstag und Bekanntmachung des Hinweises auf die Patenterteilung: **02.11.2011**
(21) Anmeldenummer: 10155038.2
(22) Anmeldetag: 01.03.2010
(51) Int. Cl.: A01D 41/12

(54) **Erntegutrestehäcksel und -verteilanordnung für einen Mähdrescher**
Harvested goods remnant shredder and distribution assembly for a combine harvester
Agencement de hachage et de répartition de résidus de produits de récolte pour une moissonneuse-batteuse

(30) Priorität: 26.03.2009 DE 102009001917
(43) Veröffentlichungstag der Anmeldung: 29.09.2010
(73) Patentinhaber: Deere & Company, Moline, IL 61265-8098 (US)
(72) Erfinder: Lauer, Friedrich, 66894, Krähenberg (DE); Pohlmann, Norbert, 66482, Zweibrücken (DE); Weichholdt, Dirk, 57200, Woelfling Les Sarreguemines (FR); Priesnitz, Rico, 66822, Lebach (DE); Klein, Oliver, 55740, Saarlouis (DE)
(74) Vertreter: Holst, Sönke

(56) Entgegenhaltungen:
- EP-A2- 0 213 370
- WO-A1-2008/156419
- DE-A1- 19 646 590
- US-B1- 6 572 035
- US-B1- 7 473 171

## Beschreibung

Die Erfindung betrifft eine Emtegutrestehäcksel- und -verteilanordnung mit einem Strohhäcksler und einem stromab des Strohhäckslers angeordneten Wurfgebläse, das wenigstens ein in einer Drehrichtung um eine Achse drehbar angeordnetes Wurfpaddel zum Verteilen der vom Strohhäcksler bereitgestellten Erntegutreste über ein Feld umfasst, wobei zumindest ein Bereich der in Drehrichtung vorlaufenden Fläche des Wurfpaddels in der Drehrichtung nach vorn gewölbt und/oder abgewinkelt ist.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Das ausgedroschene Stroh wird in der Regel entweder gehäckselt und über die Schneidwerksbreite auf dem Feld verteilt oder um den Strohhäcksler herum geleitet und in nicht gehäckselter Form in einem Schwad auf dem Feld abgelegt, um es später mit eine Ballenpresse aufnehmen zu können. Die am rückwärtigen Auslass der Reinigungseinrichtung verbleibenden Erntegutreste, wie Kaff und kleine Strohteile, werden durch einen Kaffstreuer auf dem Feld verteilt oder durch den Strohhäcksler geleitet und auf dem Feld verteilt.

Die DE 199 08 111 C1 beschreibt einen Mähdrescher mit einem Strohhäcksler und zwei seitlich nebeneinander angeordneten, dem Strohhäcksler folgenden Wurfgebläsen zum breit verteilten Austragen des Strohs über das Feld. Der Auslass des Strohhäckslers und der Einlass der in einem Gehäuse angeordneten Wurfgebläse, die um eine etwa senkrechte Achse rotierende, in sich flache Wurfpaddel umfassen, sind zu Zwecken einer richtungsänderungslosen Gutübergabe in einer Ebene angeordnet.

In der US 2007/0015556 A1 wird ein Mähdrescher mit einem Strohhäckslerbeschrieben, bei dem der Auslass des Strohhäckslers die nachfolgenden Wurfgebläse von unten her an ihrem Umfang unter einem spitzen Winkel beaufschlagt. Die Wurfpaddel der Wurfgebläse sind in sich flach und zur Drehachse hin nach oben verlaufend abgeschrägt.

Die WO 2008/156419 A1 beschreibt eine ähnliche Anordnung des Strohhäckslers und Wurfgebläses, jedoch wird der Erntegutstrom stromab des Strohhäckslers durch ein Blech abgelenkt, so dass er in radialer Richtung, jedoch unter einem relativ spitzen Winkel auf das Wurfgebläse trifft. Die Wurfpaddel der Wurfgebläse sind in sich flach.

Die US 7 390 253 B2 zeigt einen Mähdrescher mit um horizontale, sich in Fahrtrichtung erstreckende Achsen rotierenden Wurfgebläsen, die jeweils drei sich in radialer Richtung erstreckende Paddel umfassen, an denen rückseitige Abkantungen angebracht sind.

In der als gattungsbildend angesehenen US 6 343986 B1 wird ein Mähdrescher mit um horizontale, sich in Fahrtrichtung erstreckende Achsen rotierenden Wurfgebläsen vorgeschlagen, die jeweils in Drehrichtung nach vorn gekrümmte Paddel umfassen, deren axiale Abmessung nach außen hin ansteigt.

Bei den erwähnten Wurfgebläsen mit in sich flachen Wurfpaddeln werden die zu verteilenden Erntegutreste über die gesamte axiale Abmessung der Wurfpaddel auf das Feld abgegeben und verteilt. Dadurch bieten sie auftretendem Seitenwind eine entsprechende Angriffsfläche, was eine unerwünschte seitliche Abtrift der Erntegutreste zur Folge haben kann. Die Paddel nach US 6 343 896 B1 sind aufgrund ihrer Geometrie nicht in der Lage, im Mittenbereich einlaufendes Erntegut effizent abzufördern.

### Aufgabe der Erfindung

Die der Erfindung zu Grunde liegende Aufgabe wird darin gesehen, ein Wurfgebläse für einen Mähdrescher bereitzustellen, das eine konzentrierte und damit weniger windempfindliche Abgabe des auszuwerfenden Materials ermöglicht.

### Lösung

Diese Aufgabe wird erfindungsgemäß durch die Lehre des Anspruchs 1 gelöst, wobei in den weiteren Ansprüchen Merkmale aufgeführt sind, die die Lösung in vorteilhafter Weise weiterentwickeln.

Eine Erntegutrestehäcksel- und -verteilanordnung für einen Mähdrescher umfasst einen

Strohhäcksler und wenigstens ein bezüglich der Gutflussrichtung stromab des Strohhäckslers angeordnetes Wurfgebläse. Im Erntebetrieb zerkleinert der Strohhäcksler ihm zugeführte Erntegutreste, insbesondere Stroh. Er kann mit seinen Messem und ggf. zusätzlichen Förderpaddeln auch andere Erntegutreste fördern, beispielsweise Kaff, sei es gemeinsam mit dem Stroh im Häckselbetrieb oder wahlweise in einer Strohschwadablagebetriebsart, in dem das Stroh am Strohhäcksler vorbeigeführt wird, nur diese Emtegutreste. Die vom Strohhäcksler heran geförderten Erntegutreste werden durch ein, zwei oder mehrere Wurfgebläse angenommen und über das Feld verteilt. Das Wurfgebläse umfasst jeweils ein oder mehrere Wurfpaddel, die im Betrieb um eine Achse rotieren. Die mit den Erntegutresten zusammenwirkende, in Drehrichtung vorlaufende Fläche des Wurfpaddels umfasst zumindest einen in der Drehrichtung nach vom gewölbten und/oder in der Drehrichtung nach vom abgewinkelten Bereich, an dem die Erntegutreste in Drehrichtung nach hinten rutschen und somit bezüglich der axialen Richtung des Wurfpaddels konzentriert werden. Die Erntegutreste werden dann aufgrund der Fliehkräfte nach außen abgegeben, und zwar aufgrund des nach vorn gewölbten und/oder abgewinkelten Bereichs des Wurfpaddels in konzentrierter Form. Dadurch erreicht man, dass die Verteilung der Erntegutreste weniger windempfindlich wird.

Ein axial äußerer Bereich des Wurfpaddels ist in der Drehrichtung nach vom gewölbt und/oder abgewinkelt, während ein sich daran anschließender Bereich, dessen axiale Abmessung in radialer Richtung nach außen abnimmt, in axialer Richtung und flach erstreckt oder in Drehrichtung konkav gewölbt ist, aber flacher als der axial äußere Bereich ist. Die axialen Abmessungen des in der Drehrichtung nach vom gewölbten und/oder abgewinkelten, axial äußeren Bereichs des Wurfpaddels (und ggf. des im vorigen Absatz erwähnten weiteren Bereichs) nehmen in radialer Richtung des Wurfgebläses von innen nach außen hin stufenweise oder stufenlos zu. Somit werden die Erntegutreste auf ihrem Weg von innen nach außen bis zur Abgabe nach und nach in radialer Richtung konzentriert, was die Windempfindlichkeit der Verteilung der Erntegutreste verringert.

Außerdem kann ein weiterer Bereich des Wurfpaddels vorgesehen sein, der sich an der Kante des Wurfpaddels befindet, die vom erwähnten, axial äußeren Bereich des Wurfpaddels beabstandet und in der Drehrichtung nach vorn gewölbe und/oder abgewinkelt ist.

Vorzugsweise nimmt die axiale Abmessung des mittleren Bereichs von innen nach außen in dem Maße ab, in dem die axialen Abmessungen des äußeren Bereichs oder ggf. des äußeren Bereichs und des weiteren Bereichs zunehmen.

Die Anbringung des Wurfpaddels an einer rotativ angetriebenen Welle des Wurfgebläses kann auf beliebige Weise erfolgen, beispielsweise durch eine direkte Verbindung zwischen der Welle und dem Wurfpaddel, die durch eine Schweiß- oder Schraubanbindung erfolgen kann. Bei einer bevorzugten Ausführungsform treibt die Welle des Wurfgebläses einen kreisförmigen Drehteller an, an dem das oder die Wurfpaddel befestigt sind, indem sie mit einem abgekanteten, durchbohrten Befestigungsflansch versehen sind, der mit dem Drehteller verschraubt oder anderweitig verbunden ist, beispielsweise vernietet oder verschweißt.

Hinsichtlich der relativen Anordnung von Strohhäcksler und Wurfgebläse zueinander bestehen im Rahmen des erfindungsgemäßen Gedankens unterschiedliche Möglichkeiten. So kann der Strohhäcksler das Wurfgebläse in exakt radialer Richtung beaufschlagen (vgl. DE 199 08 111 1 C1) oder den radial äußeren Rand des Wurfgebläses unter einem spitzen oder stumpfen Winkel (s. US 2007/0015556 A1) oder die Erntegutreste werden dem Wurfgebläse in axialer Richtung zugeführt, sei es genau axial (s. EP 0 631 717 A1) oder unter einem spitzen oder stumpfen Winkel, mit (s. WO 2008/156419 A1) oder ohne (s. DE 10 2007 037 485 B3) Umlenkung der Erntegutreste stromab des Strohhäckslers durch ein Ablenkelement.

Bei einer Zuführung der Erntegutreste zum Wurfgebläse in axialer Richtung bietet es sich an, den nach vorn abgewinkelten und/oder gewölbten, axial äußeren Bereich des Wurfpaddels dem Strohhäcksler zugewandt anzuordnen. Dadurch wird nicht nur die Abgabe der Erntegutreste verbessert, wie zuvor beschrieben, sondern auch ihre Annahme.

### Ausführungsbeispiele

Anhand der Abbildungen werden mehrere Ausführungsbeispiele der Erfindung erläutert. Es zeigt:
- Fig. 1: eine teilgeschnittene seitliche Ansicht eines Mähdreschers mit einem Strohhäcksler und Wurfgebläsen,
- Fig. 2: eine Draufsicht auf den Strohhäcksler und die Wurfgebläse,
- Fig. 3: eine perspektivische Ansicht einer ersten Ausführungsform eines Wurfpaddels für das Wurfgebläse des Mähdreschers aus Figur 1,
- Fig. 4: eine perspektivische Ansicht einer zweiten Ausführungsform eines Wurfpaddels für das Wurfgebläse des Mähdreschers aus Figur 1, und
- Fig. 5: eine perspektivische Ansicht einer dritten Ausführungsform eines Wurfpaddels für das Wurfgebläse des Mähdreschers aus Figur 1.

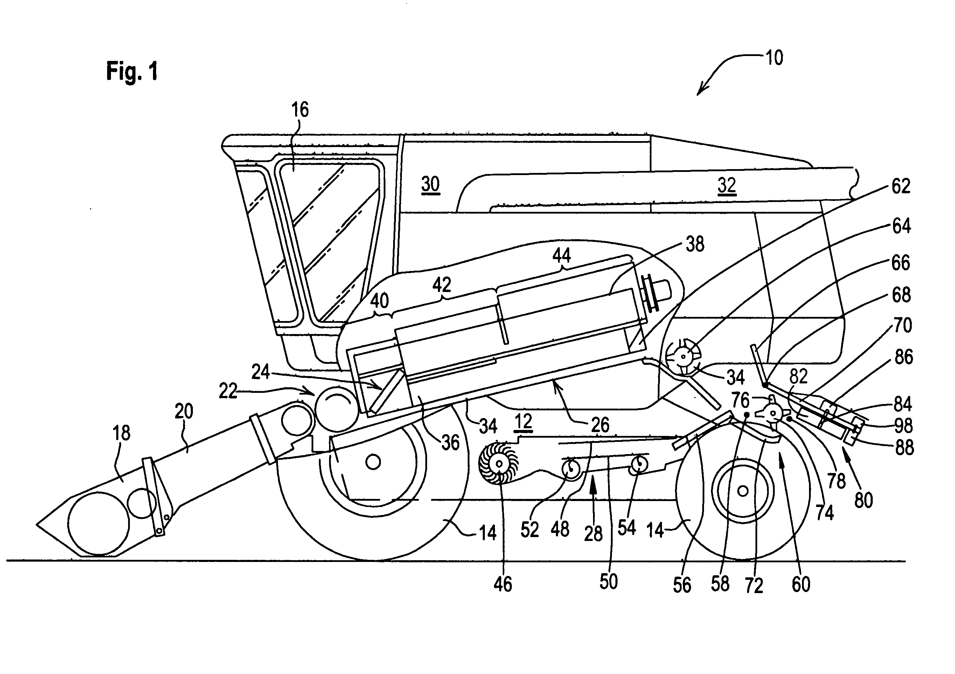

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vom und hinten, auf die Vorwärtsrichtung des Mähdreschers 10, die in der Figur 1 nach links verläuft.

Die Erntegutbearbeitungseinrichtung 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Emtegutbearbeitungseinheit 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38. Anstelle einer axialen Emtegutbearbeitungseinheit 26 können auch eine tangentiale Dreschtrommel und eine ihr folgende axiale Trenneinrichtung oder ihr folgende Strohschüttler verwendet werden.

Korn und Spreu, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die Spreu und führt das saubere Korn über einen Schneckenförderer 52 einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Am rückwärtigen Ende des unteren Lamellensiebs 50 verbleibendes Erntegut wird mittels eines Schneckenförderers 54 und eines Übericehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus Kaff (Spreu) und kleinen Strohteilchen bestehen, werden durch einen Schwingbodenförderer 56 nach hinten in einen Einlass 58 eines Strohhäckslers 60 gefördert.

Gedroschenes, den Trennabschnitt 44 verlassendes Stroh wird durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft das Stroh nach hinten aus. Rückwärtig der Auswurftrommel 64 befindet sich eine Klappe 66, die zum Umschalten zwischen einem Schwadablagebetrieb und einem Häckselbetrieb dient. Die Klappe 66 ist an ihrem rückwärtigen, unteren Ende um eine sich horizontal und quer zur Vorwärtsrichtung erstreckende Achse 68 durch einen geeigneten Hebel von Hand durch den Bediener oder mittels eines fremdkraftbetätigten Antriebs (nicht gezeigt) von der Bedienerkabine 16 aus zwischen einer Schwadablageposition, in welcher die Klappe 68 aus ihrer in Figur 1 gezeigten Stellung nach unten verschwenkt ist und den Einlass 58 des Strohhäckslers 60 nach unten abdeckt, und einer Häckselposition, in der die Klappe 68 in der Figur 1 dargestellt ist, verschwenkbar angelenkt. Die Klappe 68 erstreckt sich in ihrer Häckselposition von der Achse 68 schräg nach vom und oben. Unterhalb der Achse 68 schließt sich eine mit dem Fahrgestell 12 fest verbundene Rutsche 70 an, auf der das Stroh im Schwadablagebetrieb auf den Feldboden gleiten kann. Das Strohschwad kann noch durch an der Oberseite der Rutsche 70 angebrachte Leitkufen oder Strohleitrechen (nicht gezeigt) in eine gewünschte Form gebracht werden.

Unterhalb der Rutsche 70 befindet sich der Strohhäcksler 60, der sich aus einem Gehäuse 72 und einem darin angeordneten, um eine quer zur Vorwärtsrichtung und horizontal verlaufende Achse drehbaren Rotor 74 mit um den Umfang des Rotors 74 verteilten, paarweise pendelnd aufgehängten Häckselmessem 76 zusammensetzt. Am Rotor 74 können auch zusätzliche Wurfpaddelpaddel (nicht gezeigt) befestigt werden, oder einige oder alle Häckselmesser 76 umfassen Paddel zur Luftförderung. Die Rutsche 70 bildet ein oberes Gehäuse für den Strohhäcksler 60. Stromab eines Auslasses 78 des Strohhäckslers 60 sind zwei seitlich nebeneinander unterhalb der Rutsche 70 angeordnete Wurfgebläse 80 vorgesehen, von denen in der Figur 1 nur ein einziges erkennbar ist, und denen der Strohhäcksler 60 die Erntegutreste in axialer Richtung unter einen relativ spitzen Winkel von unten her zuführt. Die Wurfgebläse 80 umfassen eine Anzahl an Wurfpaddeln 82, die jeweils starr unterhalb von Drehtellern 102 angebracht sind, welche wiederum jeweils mit einer sich orthogonal zur Rutsche 70 erstreckenden Welle verbunden sind, die um Achsen 84 drehbar sind, die sich etwa vertikal erstrecken, jedoch leicht nach hinten und oben geneigt sind. Die Wellen sind durch jeweils einen Hydraulikmotor 86 in Drehung versetzbar.

In der Schwadablageposition fördert der Strohhäcksler 60 nur die Erntegutreste aus dem Reinigungssystem 28 zu den Wurfgebläsen 80, welche sie etwa über die Breite des Schneidwerks 18 auf dem Feldboden verteilen. Im Häckselbetrieb zerkleinert der Strohhäcksler 60 auch das Stroh auf dem Auslass 62 der Erntegutbearbeitungseinrichtung 26, das durch die Auswurftrommel 64 gegen die Klappe 66 geworfen wird und dann nach unten in den Einlass 58 des Strohhäckslers 60 fällt. Weiterhin könnte der Strohhäcksler 60 auch ein von der Rutsche 70 unabhängiges oberes Gehäuse erhalten, an dem auch die Wurfgebläse 80 befestigt werden könnten. Es wäre auch denkbar, eine von der Rutsche 70 und einem Gehäuse 72 des Strohhäckslers 60 getrennte Halterung für die Wurfgebläse 80 bereit zu stellen. Es wäre auch möglich, den Strohhäcksler 60 und die Wurfgebläse 80 derart anzuordnen, dass der Strohhäcksler 60 die Wurfgebläse 80 von oben her beaufschlagt, wobei sich die Drehteller 102 dann unterhalb der Wurfpaddel 82 angeordnet sind. Bei einer anderen Ausführungsform sind die Drehachsen 84 der Wurfgebläse 80 horizontal.

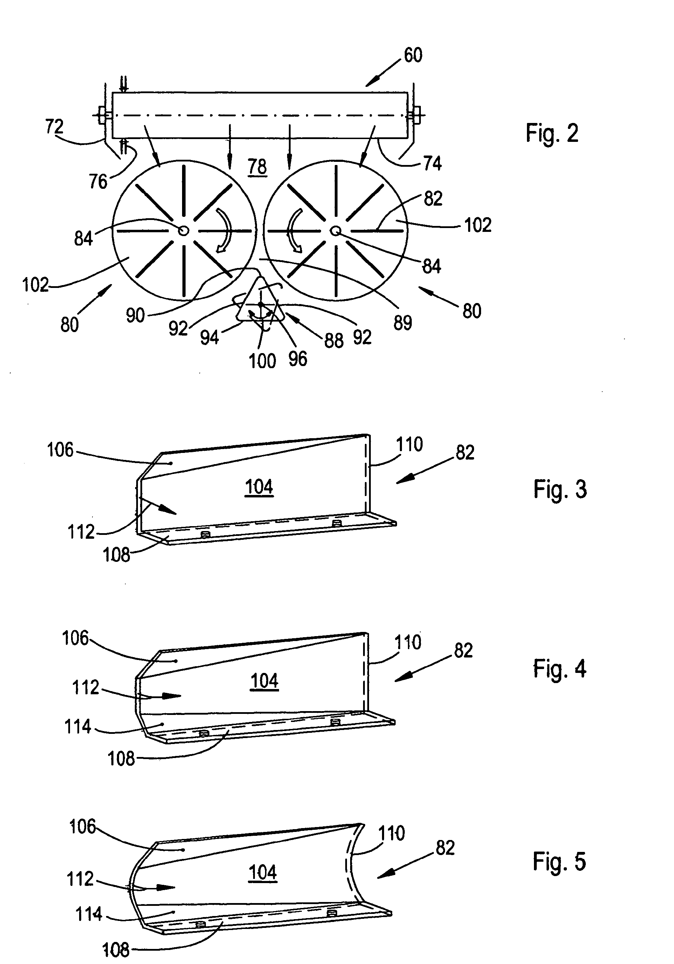

Es wird nun auf die Figur 2 verwiesen, in welcher die Emtegutrestehäcksel- und -verteilanordnung des Mähdreschers 10 in einer Draufsicht dargestellt ist. Die Erntegutrestehäcksel- und -verteilanordnung umfasst den Strohhäcksler,60 und die Wurfgebläse 80. Außerdem ist ein Gutstromtrennelement 88 vorgesehen miteiner vorderen Spitze 90, die sich - wie das ganze Gutstromtrennelement 88 rückwärtig der Drehachsen 84 der Wurfgebläse 80 in deren Zwickel bereich 89 befindet, und zwei seitlichen, geraden Wänden 92, die jeweils einem Wurfgebläse 80 benachbart angeordnet sind. Das Gutstromtrennelement 88 ist um eine etwa mittige Achse 96, die sich parallel zur Achse 84 der Gebläse 80 erstreckt, durch einen oberhalb der Rutsche 70 rückwärtig der Hydraulikmotoren 86 angebrachten Antrieb 98 in eine Schwingbewegung versetzbar.

In der Figur 3 ist eine erste Ausführungsform eines Wurfpaddels 82 in einer perspektivischen Ansicht dargestellt. Das Wurfpaddel 82 ist vorzugsweise einteilig durch Biegen aus Blech oder im Spritzgussverfahren aus Kunststoff hergestellt und umfassteinen mittleren Bereich 104, an den sich an einer Seite ein äußerer Bereichs 106 und an der anderen Seite ein abgekanteter Befestigungsflansch 108 anschließen. Der Befestigungsflansch 108 ist mit Löchern versehen, die dazu dienen, das Wurfpaddel 82 durch Schraubverbindungen am Drehteller 104 zu befestigen. Das in der Figur 3 rechts eingezeichnete Ende 110 des Wurfpaddels 82 ist im zusammengebauten Zustand der Achsel 84 zugewandt, so dass in der Figur 3 die axiale Richtung von oben nach unten und die radiale Richtung von rechts nach links verläuft. Die Drehrichtung des Wurfpaddels 82 im normalen Betrieb ist durch den Pfeil 112 gekennzeichnet. Demnach sind der Befestigungsflansch 108 um 90° und der äußere Bereich 106 um etwa 45° gegenüber dem mittleren Bereich 104 in der Drehrichtung nach vorn abgewinkelt. Der mittlere Bereich 104 ist in sich flach und erstreckt sich in axialer und radialer Richtung. Der Befestigungsflansch 108 erstreckt sich in der Ebene des Drehtellers 102. Der äußere Bereich 106 ist in der Seitenansicht dreieckig geformt und erstreckt sich vom radial inneren Ende 110 des Wurfpaddels 82 bis zum radial äußeren Ende des Wurfpaddels 82, wobei sich seine axiale Abmessung in radialer Richtung vom radial inneren Ende 110 des Wurfpaddels 82 bis zum radial äußeren Ende des Wurfpaddels 82 kontinuierlich vergrößert. Es wäre auch möglich, das radial innere Ende des äußeren Bereichs 106 weiter nach außen zu verlegen. Der abgewinkelte, radial äußere Bereich 106 hat die Wirkung, dass die vom Strohhäcksler 60 einlaufenden Erntegutreste bei ihrem Weg entlang der Bereiche 104, 106, den sie aufgrund der wirkenden Fliehkräfte von innen nach außen zurücklegen, bevor sie auf das Feld abgegeben werden, nach und nach im mittleren Bereich 104 konzentriert und somit auch konzentriert auf dem Feld verteilt werden, wodurch die Seitenwindempfindlichkeit vermindert wird. Der in Drehrichtung abgewinkelte, äußere Bereich 106 verbessert außerdem die Annahme der Erntegutreste vom Ströhhäcksler 60. Die axiale Abmessung des mittleren Bereichs 104 nimmt von innen nach außen in dem Maße ab, in dem die axiale Abmessung des äußeren Bereichs 106 zunimmt.

Bei der in der Figur 4 dargestellten, zweiten Ausführungsform des Wurfpaddels 82, bei der mit der ersten Ausführungsform übereinstimmende Elemente mit denselben Bezugszeichen versehen sind, ist als einziger Unterschied ein weiterer, abgewinkelter Bereich 114 zwischen dem mittleren Bereich 104 und dem Befestigungsflansch 108 vorgesehen. Der weitere Bereich 114 ist - wie der äußere Bereich 106 - um etwa 45° gegenüber dem mittleren Bereich 104 in der Drehrichtung nach vorn abgewinkelt, in der Seitenansicht dreieckig geformt und erstreckt sich vom radial inneren Ende 110 des Wurfpaddels 82 bis zum radial äußeren Ende des Wurfpaddels 82, wobei sich seine axiale Abmessung in radialer Richtung vom radial inneren Ende 140 des Wurfpaddels 82 bis zum radial äußeren Ende des Wurfpaddels 82 kontinuierlich vergrößert. Es wäre auch möglich, das radial innere Ende des weiteren Bereichs 114 weiter nach außen zu verlegen. Bei dieser Ausführungsform konzentrieren die Bereiche 106 und 114 die Erntegutreste auf einen am radial äußeren Ende relativ engen mittleren Bereich 104, was zu einer noch konzentrierteren Erntegutresteabgabe führt.

Bei der in der Figur 5 dargestellten, dritten Ausführungsform des Wurfpaddels 82, bei der mit der zweiten Ausführungsform übereinstimmende Elemente mit denselben Bezugszeichen versehen sind, ist als einziger Unterschied zur zweiten Ausführungsform anzumerken, dass der mittlere Bereich 104 nicht in sich flach, sondern konkav nach vorn gewölbt ist, so dass er eine Art in radialer Richtung von innen nach außen verengende, durch die abgewinkelten Bereiche 106, 114 begrenzte Rinne bildet, in der sich die Erntegutreste konzentrieren. Die abgewinkelten Bereiche 106, 114 sind steiler in die Drehrichtung abgewinkelt als der mittlere Bereich 104. Bei den Ausführungsformen nach Figur 4 und 5 nimmt die axiale Abmessung des mittleren Bereichs 104 von innen nach außen in dem Maße ab, in dem die axialen Abmessungen des äußeren Bereichs 106 und des weiteren Bereichs 114 zunehmen.

## Patentansprüche

1. Emtegutrestehäcksel- und -verteilanordnung mit einem Strohhäcksler (60) und einem stromab des Strohhäckslers (60) angeordneten Wurfgebläse (80), das wenigstens ein in einer Drehrichtung um eine Achse (84) drehbar angeordnetes Wurfpaddel (82) zum Verteilen der vom Strohhäcksler (60) bereitgestellten Erntegutreste über ein Feld umfasst, wobei zumindest ein Bereich (104, 106, 114) der in Drehrichtung vorlaufenden Fläche des Wurfpaddels (82) in der Drehrichtung nach vorn gewölbt und/oder abgewinkelt ist, **dadurch gekennzeichnet, dass** ein axial äußerer Bereich (106) des Wurfpaddels (82) in der Drehrichtung nach vom gewölbt und/oder abgewinkelt ist, dass die axiale Abmessung des nach vorn gewölbten und/oder abgewinkelten, axial äußeren Bereichs (106) des Wurfpaddels (82) in radialer Richtung nach außen hin zunimmt und dass das Wurfpaddel (82) einen sich an den vorn gewölbten und/oder abgewinkelten, axial äußeren Bereich (106) des Wurfpaddels anschließenden Bereich (104) aufweist, dessen axiale Abmessung in radialer Richtung nach außen hin abnimmt und der sich in radialer Richtung erstreckt und flach oder in der Drehrichtung nach vom konkav gewölbt und flacher ist als der nach vorn gewölbte und/oder abgewinkelte, axial äußere Bereich (106) des Wurfpaddels (82).

2. Emtegutrestehäcksel- und -verteilanordnung nach Anspruch 1, **dadurch gekennzeichnet, dass** die axiale Abmessung des nach vom gewölbten und/oder abgewinkelten, axial äußeren Bereichs des Wurfpaddels (82) in radialer Richtung stufenweise oder stufenlos zunimmt.

3. Emtegutrestehäcksel- und -verteilanordnung nach einem der Ansprüche 1 oder 2, **dadurch gekennzeichnet, dass** das Wurfpaddel (82) einen weiteren Bereich (114) umfasst, der vom nach vorn gewölbten und/oder abgewinkelten, axial äußeren Bereich (106) beabstandet und in der Drehrichtung nach vom abgewinkelt und/oder konkav nach vom gewölbt ist.

4. Emtegutrestehäcksel- und -verteilanordnung nach Anspruch 3, **dadurch gekennzeichnet, dass** die axiale Abmessung des weiteren Bereichs (114) in radialer Richtung nach außen hin zunimmt.

5. Erntegutrestehäcksel- und -verteilanordnung nach einem der Ansprüche 1 bis 4,
**dadurch gekennzeichnet, dass** die axiale Abmessung des mittleren Bereichs (104) von innen nach außen in dem Maße abnimmt, in dem die axialen Abmessungen des äußeren Bereichs (106) oder des äußeren Bereichs (106) und des weiteren Bereichs (114) zunehmen.

6. Emtegutrestehäcksel- und -verteilanordnung nach einem der Ansprüche 1 bis 5,
**dadurch gekennzeichnet, dass** das Wurfpaddel (82) mit einem abgekanteten Befestigungsflansch (108) versehen ist, mit dem es mit einem mit der Achse (84) verbundenen Element des Wurfgebläses (80) verbunden oder verbindbar ist, insbesondere einem Drehteller (102).

7. Emtegutrestehäcksel- und -verteilanordnung nach einem der Ansprüche 1 bis 6,
**dadurch gekennzeichnet, dass** der Strohhäcksler (60) derart angeordnet ist, dass er das Wurfgebläse (80) in axialer Richtung unter einem spitzen oder stumpfen Winkel beaufschlagt.

8. Emtegutrestehäcksel- und -verteilanordnung nach einem der Ansprüche 1 bis 7,
**dadurch gekennzeichnet, dass** der axial äußere Bereich (106) des Wurfpaddels (82) dem Strohhäcksler (60) zugewandt ist.

9. Mähdrescher (10) mit einer Emtegutrestehäcksel- und -verteilanordnung nach einem der Ansprüche 1 bis 8.

## Claims

1. Crop residue chopping and distributing arrangement having a straw chopper (60) and an ejector blower (80) which is arranged downstream of the straw chopper (60) and comprises at least one ejector paddle (82), which is arranged such that it can be rotated about an axle (84) in a direction of rotation, for distributing the crop residues provided by the straw chopper (60) over a field, wherein at least a region (104, 106, 114) of that surface of the ejector paddle (82) which is in front in the direction of rotation is curved and/or angled forwards in the direction of rotation, **characterized in that** an axially external region (106) of the ejector paddle (82) is curved and/or angled forwards in the direction of rotation, **in that** the axial dimension of the forwardly curved and/or angled, axially external region (106) of the ejector paddle (82) increases towards the outside in the radial direction, and **in that** the ejector paddle (82) has a region (104) which adjoins the forwardly curved and/or angled, axially external region (106) of the ejector paddle, the axial dimension of which region (106) decreases towards the outside in the radial direction and which extends in the radial direction and is flat or is curved forwards in a concave manner in the direction of rotation and is flatter than the forwardly curved and/or angled, axially external region (106) of the ejector paddle (82).

2. Crop residue chopping and distributing arrangement according to Claim 1, **characterized in that** the axial dimension of the forwardly curved and/or angled, axially external region of the ejector paddle (82) increases in steps or in a stepless manner in the radial direction.

3. Crop residue chopping and distributing arrangement according to either of Claims 1 and 2, **characterized in that** the ejector paddle (82) comprises a further region (114) which is spaced apart from the forwardly curved and/or angled, axially external region (106) and is angled forwards and/or is curved forwards in a concave manner in the direction of rotation.

4. Crop residue chopping and distributing arrangement according to Claim 3, **characterized in that** the axial dimension of the further region (114) increases towards the outside in the radial direction.

5. Crop residue chopping and distributing arrangement according to one of Claims 1 to 4, **characterized in that** the axial dimension of the central region (104) decreases from the inside to the outside to the extent to which the axial dimensions of the external region (106) or of the external region (106) and the further region (114) increase.

6. Crop residue chopping and distributing arrangement according to one of Claims 1 to 5, **characterized in that** the ejector paddle (82) is provided with a folded fastening flange (108), by way of which it is or can be connected to an element, which is connected to the axle (84), of the ejector blower (80), in particular to a rotary disc (102).

7. Crop residue chopping and distributing arrangement according to one of Claims 1 to 6, **characterized in that** the straw chopper (60) is arranged such that it impinges on the ejector blower (80) at an acute or obtuse angle in the axial direction.

8. Crop residue chopping and distributing arrangement according to one of Claims 1 to 7, **characterized in that** the axially external region (106) of the ejector paddle (82) faces the straw chopper (60).

9. Combine (10) having a crop residue chopping and distributing arrangement according to one of Claims 1 to 8.

## Revendications

1. Agencement de hachage et de répartition de résidus de produits de récolte avec un broyeur de paille (60) et une soufflante d'éjection (80) disposée en aval du broyeur de paille (60), qui comprend au moins une palette d'éjection (82) disposée de façon rotative dans un sens de rotation autour d'un axe (84) pour la répartition sur un champ des résidus de produits de récolte fournis par le broyeur de paille (60), dans lequel au moins une région (104, 106, 114) de la face avant dans le sens de rotation de la palette d'éjection (82) est incurvée et/ou coudée vers l'avant dans le sens de rotation, **caractérisé en ce qu'**une région (106) axialement extérieure de la palette d'éjection (82) est incurvée et/ou coudée vers l'avant dans le sens de rotation **en ce que** la dimension axiale de la région (106) axialement extérieure, incurvée et/ou coudée vers l'avant dans le sens de rotation, de la palette d'éjection (82) augmente vers l'extérieur en direction radiale et **en ce que** la palette d'éjection (82) présente une région (104) se raccordant à la région (106) radialement extérieure, incurvée et/ou coudée vers l'avant, de la palette d'éjection, dont la dimension axiale diminue vers l'extérieur en direction radiale et qui s'étend en direction radiale et est plate ou est incurvée de façon concave vers l'avant dans le sens de rotation et est plus plate que la région axialement extérieure (106), incurvée et/ou coudée vers l'avant, de la palette d'éjection (82).

2. Agencement de hachage et de répartition de résidus de produits de récolte selon la revendication 1, **caractérisé en ce que** la dimension axiale de la région axialement extérieure, incurvée et/ou coudée vers l'avant, de la palette d'éjection (82) augmente par degrés ou en continu en direction radiale.

3. Agencement de hachage et de répartition de résidus de produits de récolte selon l'une quelconque des revendications 1 ou 2, **caractérisé en ce que** la palette d'éjection (82) comprend une autre région (114), qui est espacée de la région axialement extérieure (106), incurvée et/ou coudée vers l'avant, et est coudée vers l'avant et/ou est incurvée de façon concave vers l'avant dans le sens de rotation.

4. Agencement de hachage et de répartition de résidus de produits de récolte selon la revendication 3, **caractérisé en ce que** la dimension axiale de l'autre région (114) augmente vers l'extérieur en direction radiale.

5. Agencement de hachage et de répartition de résidus de produits de récolte selon l'une quelconque des revendications 1 à 4, **caractérisé en ce que** la dimension axiale de la région médiane (104) diminue de l'intérieur vers l'extérieur, dans la mesure où les dimensions axiales de la région extérieure (106) ou de la région extérieure (106) et de l'autre région (114) augmentent.

6. Agencement de hachage et de répartition de résidus de produits de récolte selon l'une quelconque des revendications 1 à 5, **caractérisé en ce que** la palette d'éjection (82) est munie d'une bride de fixation pliée (108), avec laquelle elle est ou peut être assemblée à un élément de la soufflante d'éjection (80) relié à l'axe (84), en particulier un plateau tournant (102).

7. Agencement de hachage et de répartition de résidus de produits de récolte selon l'une quelconque des revendications 1 à 6, **caractérisé en ce que** le broyeur de paille (60) est disposé de telle manière qu'il alimente la soufflante d'éjection (80) en direction axiale sous un angle aigu ou sous un angle obtus.

8. Agencement de hachage et de répartition de résidus de produits de récolte selon l'une quelconque des revendications 1 à 7, **caractérisé en ce que** la région axialement extérieure (106) de la palette d'éjection (82) est tournée vers le broyeur de paille (60).

9. Moissonneuse-batteuse (10) avec un agencement de hachage et de répartition de résidus de produits de récolte selon l'une quelconque des revendications 1 à 8.
